# EUROPEAN PATENT APPLICATION

(11) **EP 4 741 127 A1**
(43) Date of publication of application: **13.05.2026**
(21) Application number: 25189429.1
(22) Date of filing: 14.07.2025
(51) Int. Cl.: B26D 7/04, B23D 33/02, B26D 1/02, B26D 1/06, B26D 7/02, B26D 1/00

(54) **ELECTRODE PLATE CUTTING UNIT FOR SECONDARY BATTERY, SECONDARY BATTERY MANUFACTURING APPARATUS HAVING ELECTRODE PLATE CUTTING UNIT, AND METHOD OF MANUFACTURING SECONDARY BATTERY**

(30) Priority: 06.11.2024 KR 20240156594
(71) Applicant: SAMSUNG SDI CO., LTD., Yongin-si, Gyeonggi-do 17084 (KR)
(72) Inventor: KWON, Junhwan, 17084 Yongin-si (KR); KIM, Jinhwan, 17084 Yongin-si (KR); IM, Jongmin, 17084 Yongin-si (KR); KANG, Bonggeun, 17084 Yongin-si, (KR)
(74) Representative: Marks & Clerk LLP

(57) **Abstract**

The present disclosure is directed to suppressing movement of an electrode plate when cutting an electrode plate to prevent deintercalation of an active material, and not causing damage or deformation of a front end surface through a uniform surface contact between a cutter and a tilting stripper. The electrode plate cutting unit includes a lower cutting unit having a lower cutter installed below a transport path of an electrode plate moving along the transport path and having an inclined blade and a support stripper positioned at a side portion of the lower cutter to support the electrode plate upwardly, and an upper cutting unit having an upper cutter provided to move upwardly and downwardly above the transport path to cut the electrode plate through cross motion with the lower cutter when moving downwardly and a tilting stripper installed at a side portion of the upper cutter and tilted while supporting the electrode plate toward the lower cutter.

## Description

### FIELD

The present disclosure relates to a cutting unit for cutting an electrode plate during a process of manufacturing a secondary battery, a secondary battery manufacturing apparatus having the cutting unit, and a method of manufacturing a secondary battery.

### BACKGROUND

Secondary batteries are batteries that can be charged and discharged, unlike primary batteries that cannot be recharged. In general, a secondary battery includes an electrode assembly composed of positive and negative electrode plates (hereinafter referred to as "electrode plates") and a separator. The electrode plate may be manufactured through coating, rolling, slitting, and notching processes.

An electrode plate cutting machine may be used during a process of manufacturing an electrode plate. The electrode plate cutting machine includes upper and lower cutters installed on upper and lower portions of the electrode plate, respectively, which is transported along a transport path. The upper and lower cutters cut the electrode plate positioned between the upper and lower cutters through a cross motion.

The herein information disclosed in this Background section is for enhancement of understanding of the background of the present disclosure, and therefore, it may contain information that does not constitute a related (or prior) art.

### SUMMARY

The present disclosure is directed to providing an electrode plate cutting unit for a secondary battery, a secondary battery manufacturing apparatus having the cutting unit, and a method of manufacturing a secondary battery, in which movement of an electrode plate is suppressed when cutting the electrode plate to prevent deintercalation of an active material from a substrate when cutting, omitting a post-processing process for collecting foreign substances after cutting, and not causing damage or deformation of a front end surface.

According to an aspect of the present disclosure, there is provided an electrode plate cutting unit for a secondary battery, which includes a lower cutting unit having a lower cutter installed below a transport path of an electrode plate moving along the transport path and having an inclined blade and a support stripper positioned at a side portion of the lower cutter to support the electrode plate upwardly, and an upper cutting unit having an upper cutter provided to move upwardly and downwardly above the transport path to cut the electrode plate through cross motion with the lower cutter when moving downwardly and a tilting stripper installed at a side portion of the upper cutter and tilted while supporting the electrode plate toward the lower cutter.

According to another aspect of the present disclosure, there is provided a secondary battery manufacturing apparatus including an electrode plate transport unit configured to transport an electrode plate along a transport path, a winding unit configured to wind the electrode plate transported by the electrode plate transport unit, a cutting unit including a lower cutting unit having a lower cutter installed below the transport path and having an inclined blade and a support stripper positioned at a side portion of the lower cutter to support the electrode plate upwardly, and an upper cutting unit having an upper cutter provided to move upwardly and downwardly above the transport path to cut the electrode plate through cross motion with the lower cutter when moving downwardly and a tilting stripper installed at a side portion of the upper cutter and tilted while supporting the electrode plate toward the lower cutter, and a vertical movement driving unit configured to move the upper cutting unit upwardly and downwardly.

According to still another aspect of the present disclosure, there is provided a method of manufacturing a secondary battery, which includes a transporting operation of transporting an electrode plate, which will be cut, along a transport path, a cutting operation of cutting the electrode plate using a cutting unit including a lower cutter installed below a transport path of an electrode plate moving along the transport path and having an inclined blade, a support stripper positioned at a side portion of the lower cutter to support the electrode plate upwardly, an upper cutter provided to move upwardly and downwardly above the transport path to cut the electrode plate through cross motion with the lower cutter when moving downwardly, and a tilting stripper installed at a side portion of the upper cutter and tilted while supporting the electrode plate toward the lower cutter, wherein the cutting of the electrode plate is performed while the tilting stripper is tilted to be in close contact with the electrode plate, and a winding operation of winding the cut electrode plate.

Aspects and features of the present disclosure are not limited to those described herein, and other aspects and features not specifically mentioned herein will be clearly understood by those skilled in the art from the description of the present disclosure herein.

At least some of the above and other features of the invention are set out in the claims.

### BRIEF DESCRIPTION OF THE DRAWINGS

The herein and other objects, features and advantages of the present disclosure will become more apparent to those of ordinary skill in the art by describing embodiments thereof in detail with reference to the accompanying drawings, in which:
FIG. 1 is a schematic view illustrating an electrode assembly of a secondary battery that may be manufactured through a secondary battery manufacturing apparatus according to some embodiments of the present disclosure;
FIG. 2 is a view illustrating an interior of a pouch-type battery to which the electrode assembly of FIG. 1 is applied;
FIG. 3 is a cross-sectional view illustrating a cylindrical battery manufactured through the secondary battery manufacturing apparatus according to some embodiments of the present disclosure;
FIG. 4 is a perspective view illustrating an exterior of a prismatic battery manufactured through the secondary battery manufacturing apparatus according to some embodiments of the present disclosure;
FIG. 5 is a cross-sectional view along line A-A in FIG. 4;
FIG. 6 is a view for describing a configuration and operation method of the secondary battery manufacturing apparatus according to some embodiments of the present disclosure;
FIGS. 7 and 8 are views for describing a configuration and operation of an electrode plate cutting unit according to some embodiments of the present disclosure;
FIGS. 9 and 10 are views illustrating a modified example of the electrode plate cutting unit according to some embodiments of the present disclosure;
FIG. 11 is a partial perspective view for describing a mounting structure of a tilting stripper of the electrode plate cutting unit according to some embodiments of the present disclosure;
FIG. 12 is a view separately illustrating a lower cutter illustrated in FIG. 7;
FIG. 13 is a perspective view illustrating a lower cutter of FIG. 9;
FIGS. 14 to 16 are views for describing a modified example of a tilting stripper and a support bracket applicable to the cutting unit according to some embodiments of the present disclosure;
FIG. 17 is a partially cut view illustrating an end portion of the support bracket of FIG. 16; and
FIG. 18 is a flowchart illustrating a method of manufacturing a secondary battery according to some embodiments of the present disclosure.

### DETAILED DESCRIPTION

Hereinafter, embodiments of the present disclosure will be described, in detail, with reference to the accompanying drawings. The terms or words used in the present specification and claims are not to be narrowly interpreted according to their general or dictionary meanings and should be interpreted as having meanings and concepts that are consistent with the technical idea of the present disclosure on the basis of the principle that an inventor can be his/her own lexicographer to appropriately define concepts of terms to describe his/her disclosure in the best way.

The embodiments described in this specification and the configurations shown in the drawings are only some embodiments of the present disclosure and do not represent all of the aspects, features, and embodiments of the present disclosure. Accordingly, it should be understood that there may be various equivalents and modifications that can replace or modify one or more embodiments or features therein described herein at the time of filing this application.

It will be understood that if an element or layer is referred to as being "on," "connected to," or "coupled to" another element or layer, it may be directly on, connected, or coupled to the other element or layer or one or more intervening elements or layers may also be present. When an element or layer is referred to as being "directly on," "directly connected to," or "directly coupled to" another element or layer, there are no intervening elements or layers present. For example, if a first element is described as being "coupled" or "connected" to a second element, the first element may be directly coupled or connected to the second element or the first element may be indirectly coupled or connected to the second element via one or more intervening elements.

In the figures, dimensions of the various elements, layers, etc. may be exaggerated for clarity of illustration. The same reference numerals designate the same elements. As used herein, the term "and/or" includes any and all combinations of one or more of the associated listed items. Further, the use of "may" if describing embodiments of the present disclosure relates to "one or more embodiments of the present disclosure." Expressions, such as "at least one of" and "any one of," if preceding a list of elements, modify the entire list of elements and do not modify the individual elements of the list. When phrases such as "at least one of A, B and C, "at least one of A, B or C," "at least one selected from a group of A, B and C," or "at least one selected from among A, B and C" are used to designate a list of elements A, B and C, the phrase may refer to any and all suitable combinations or a subset of A, B and C, such as A, B, C, A and B, A and C, B and C, or A and B and C. As used herein, the terms "use," "using," and "used" may be considered synonymous with the terms "utilize," "utilizing," and "utilized," respectively. As used herein, the terms "substantially," "about," and similar terms are used as terms of approximation and not as terms of degree, and are intended to account for the inherent variations in measured or calculated values that would be recognized by those of ordinary skill in the art.

It will be understood that, although the terms first, second, third, etc. may be used herein to describe various elements, components, regions, layers, and/or sections, these elements, components, regions, layers, and/or sections should not be limited by these terms. These terms are used to distinguish one element, component, region, layer, or section from another element, component, region, layer, or section. Thus, a first element, component, region, layer, or section discussed herein could be termed a second element, component, region, layer, or section without departing from the teachings of example embodiments.

Spatially relative terms, such as "beneath," "below," "lower," "above," "upper," and the like, may be used herein for ease of description to describe one element or feature's relationship to another element(s) or feature(s) as illustrated in the figures. It will be understood that the spatially relative terms are intended to encompass different orientations of the device in use or operation in addition to the orientation depicted in the figures. For example, if the device in the figures is turned over, elements described as "below" or "beneath" other elements or features would then be oriented "above" or "over" the other elements or features. Thus, the term "below" may encompass both an orientation of above and below. The device may be otherwise oriented (rotated 90 degrees or at other orientations), and the spatially relative descriptors used herein should be interpreted accordingly.

The terminology used herein is for the purpose of describing embodiments of the present disclosure and is not intended to be limiting of the present disclosure. As used herein, the singular forms "a" and "an" are intended to include the plural forms as well, unless the context clearly indicates otherwise. It will be further understood that the terms "includes," "including," "comprises," and/or "comprising," if used in this specification, specify the presence of stated features, integers, steps, operations, elements, and/or components but do not preclude the presence or addition of one or more other features, integers, steps, operations, elements, components, and/or groups thereof.

Also, any numerical range disclosed and/or recited herein is intended to include all subranges of the same numerical precision subsumed within the recited range. For example, a range of "1.0 to 10.0" is intended to include all subranges between (and including) the recited minimum value of 1.0 and the recited maximum value of 10.0, that is, having a minimum value equal to or greater than 1.0 and a maximum value equal to or less than 10.0, such as, for example, 2.4 to 7.6. Any maximum numerical limitation recited herein is intended to include all lower numerical limitations subsumed therein, and any minimum numerical limitation recited in this specification is intended to include all higher numerical limitations subsumed therein. Accordingly, Applicant reserves the right to amend this specification, including the claims, to expressly recite any sub-range subsumed within the ranges expressly recited herein. All such ranges are intended to be inherently described in this specification such that amending to expressly recite any such subranges would comply with the requirements of patent rules.

References to two compared elements, features, etc. as being "the same" may mean that they are "substantially the same." Thus, the phrase "substantially the same" may include a case having a deviation that is considered low in the art, for example, a deviation of 5% or less. In addition, if a certain parameter is referred to as being uniform in a given region, it may mean that it is uniform in terms of an average.

Throughout the specification, unless otherwise stated, each element may be singular or plural.

Arranging an arbitrary element "above (or below)" or "on (under)" another element may mean that the arbitrary element may contact the upper (or lower) surface of the element, and another element may also be interposed between the element and the arbitrary element located on (or under) the element.

In addition, it will be understood that if a component is referred to as being "linked," "coupled," or "connected" to another component, the elements may be directly "coupled," "linked" or "connected" to each other, or another component may be "interposed" between the components."

Throughout the specification, if "A and/or B" is stated, it means A, B or A and B, unless otherwise stated. That is, "and/or" includes any or all combinations of a plurality of items enumerated. When "C to D" is stated, it means C or more and D or less, unless otherwise specified.

The terminology used herein is for the purpose of describing embodiments of the present disclosure and is not intended to limit the present disclosure.

The conventional electrode plate cutting machine has a problem that an electrode plate moves when cutting the electrode plate. The reason that the electrode plate moves is that there is no separate support mechanism for supporting the electrode plate while cutting. In addition, the movement of the electrode plate causes deintercalation of an active material from an electrode plate substrate while the electrode plate is cut. Accordingly, the conventional electrode plate cutting machine additionally requires a suction device, a foreign substance collecting process, or the like for removing foreign substances.

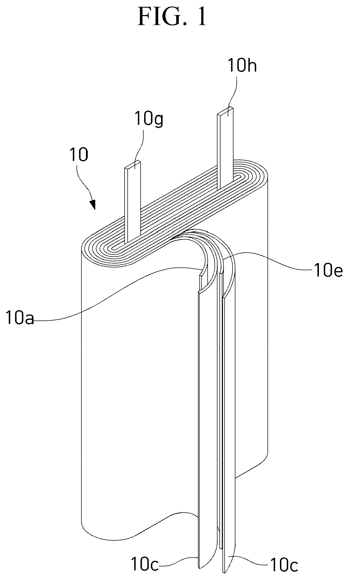

FIG. 1 is a schematic view illustrating an electrode assembly of a secondary battery which may be manufactured through an apparatus for manufacturing a secondary battery according to embodiments of the present disclosure.

An electrode assembly 10 may be formed by winding or stacking a first electrode plate 10a, a separator 10c, and a second electrode plate 10e, each of which are formed as thin plates or films.

In other embodiments, the electrode assembly 10 may be a stack type rather than a winding type, and the shape of the electrode assembly 10 is not limited in the present disclosure. In addition, the electrode assembly 10 may be a Z-stack electrode assembly in which a positive electrode plate and a negative electrode plate are inserted into both sides (e.g., opposite sides) of a separator, which is then bent (or folded) into a Z-stack

In addition, one or more electrode assemblies may be stacked (e.g., arranged) such that long sides of the electrode assemblies are adjacent to each other and accommodated in a case, and the number of electrode assemblies in a case is not limited in the present disclosure. The first electrode plate 10a of the electrode assembly 10 may act as a negative electrode, and the second electrode plate 10e may act as a positive electrode. Of course, the reverse is also possible.

The first electrode plate 10a may be formed by applying (e.g., coating or depositing) a first electrode active material, such as graphite or carbon, onto a first electrode substrate formed of a metal foil, such as copper, a copper alloy, nickel, or a nickel alloy. The first electrode plate 10a may include a first electrode tab 10g (e.g., a first uncoated portion), which is a region to which the first electrode active material is not applied. The first electrode tab 10g may be connected to an external first terminal. In some embodiments, when the first electrode plate 10a is manufactured, the first electrode tab 10g may be formed by being cut in advance to protrude to (or protrude from) one side of the electrode assembly 10, or the first electrode tab 10g may protrude to one side of the electrode assembly 10 more than (e.g., farther than or beyond) the separator 10c without being separately cut.

The second electrode plate 10e may be formed by applying (e.g., coating or depositing) a second electrode active material, such as a transition metal oxide, onto a second electrode substrate formed of a metal foil, such as aluminum or an aluminum alloy. The second electrode plate 10e may include a second electrode tab 10h (e.g., a second uncoated portion), which is a region to which the second electrode active material is not applied. The second electrode tab 10h may be connected to an external second terminal. In some embodiments, the second electrode tab 10h may be formed by being cut in advance to protrude to a side or the other side (e.g., the opposite side) of the electrode assembly 10 when the second electrode plate 10e is manufactured, or the second electrode plate 10e may protrude to a side or the other side of the electrode assembly more than (e.g., farther than or beyond) the separator 10c without being separately cut.

The separator 10c prevents a short-circuit between the first electrode plate 10a and the second electrode plate 10e while allowing movement of lithium ions therebetween. The separator 10c may be made of, for example, a polyethylene film, a polypropylene film, a polyethylene-polypropylene film, or the like.

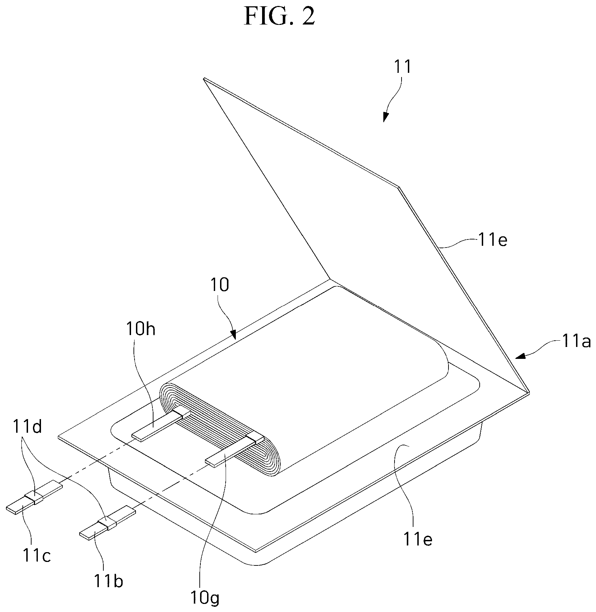

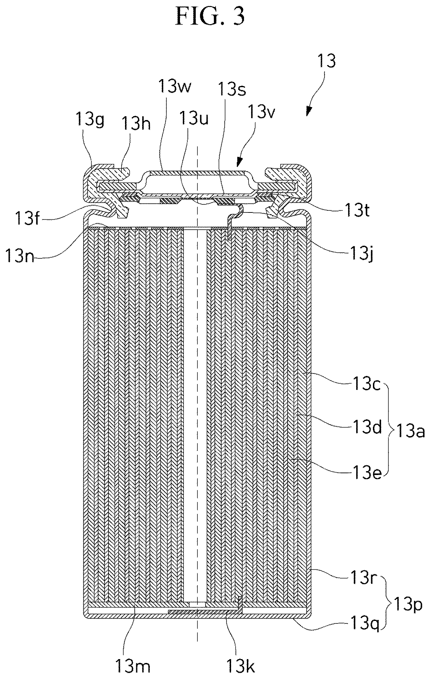

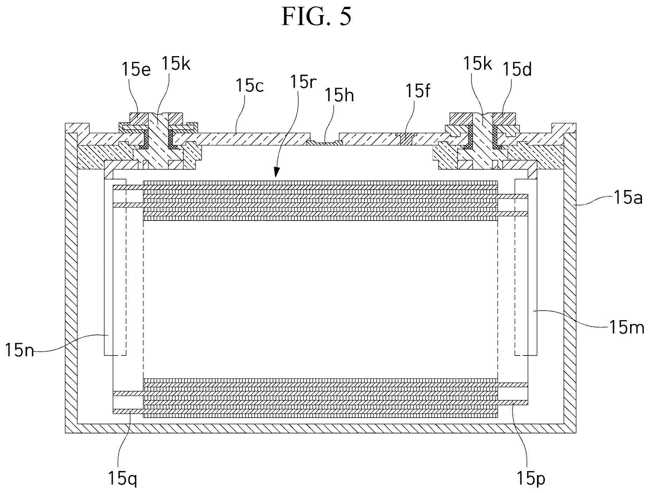

In some embodiments, the electrode assembly 10 may be accommodated in a case along with an electrolyte. In a pouch-type secondary battery, an electrode assembly 10 may be accommodated in a pouch made of flexible material (see, e.g., FIG. 2). In a cylindrical or prismatic secondary battery, an electrode assembly 10 may be accommodated in a cylindrical or prismatic metal casing (see, e.g., FIGS. 3 and 5).

A description is given of materials that can be used for the electrode plate of the herein electrode assembly.

As the positive electrode active material, a compound capable of reversibly intercalating/deintercalating lithium (e.g., a lithiated intercalation compound) may be used. For example, at least one of a composite oxide of lithium and a metal selected from cobalt, manganese, nickel, and combinations thereof may be used.

The composite oxide may be a lithium transition metal composite oxide, and examples thereof may include a lithium nickel-based oxide, a lithium cobalt-based oxide, a lithium manganese-based oxide, a lithium iron phosphate-based compound, a cobalt-free nickel-manganese-based oxide, or a combination thereof.

As an example, a compound represented by any one of the following formulas may be used: LiₐA_{1-b}X_{b}O_{2-c}D_{c} (0.90≤a≤1.8, 0≤b≤0.5, 0≤c≤0.05); LiₐMn_{2-b}X_{b}O_{4-c}D_{c} (0.90≤a≤1.8, 0≤b≤0.5, 0≤c≤0.05); LiₐNi_{1-b-c}Co_{b}X_{c}O_{2-α}D_{α} (0.90≤a≤1.8, 0≤b≤0.5, 0≤c≤0.5, 0<α<2); LiₐNi_{1-b-c}Mn_{d}X_{c}O_{2-α}D_{α} (0.90≤a≤1.8, 0≤b≤0.5, 0≤c≤0.5, 0<α<2); LiₐNi_{b}Co_{c}L¹_{d}GₑO₂ (0.90≤a≤1.8, 0≤b≤0.9, 0≤c≤0.5, 0≤d≤0.5, 0≤e≤0.1); LiₐNiG_{b}O₂ (0.90≤a≤1.8, 0.001≤b≤0.1); LiₐCoG_{b}O₂ (0.90≤a≤1.8, 0.001≤b≤0.1); LiₐMn_{1-b}G_{b}O₂ (0.90≤a≤1.8, 0.001≤b≤0.1); LiₐMn₂G_{b}O₄ (0.90≤a≤1.8, 0.001≤b≤0.1); LiₐMn_{1-g}G_{g}PO₄ (0.90≤a≤1.8, 0≤g≤0.5); Li_{(3-f)}Fe₂(PO₄)₃ (0≤f≤2); LiₐFePO₄ (0.90≤a≤1.8).

In the herein formulas: A is Ni, Co, Mn, or a combination thereof; X is Al, Ni, Co, Mn, Cr, Fe, Mg, Sr, V, a rare earth element, or a combination thereof; D is O, F, S, P, or a combination thereof; G is Al, Cr, Mn, Fe, Mg, La, Ce, Sr, V, or a combination thereof; and L¹ is Mn, Al, or a combination thereof.

A positive electrode for a lithium secondary battery may include a substrate and a positive electrode active material layer formed on the substrate. The positive electrode active material layer may include a positive electrode active material and may further include a binder and/or a conductive material.

The content of the positive electrode active material is in a range of about 90 wt% to about 99 wt% on the basis of 100 wt% of the positive electrode active material layer, and the content of the binder and the conductive material is in a range of about 0.5 wt% to about 5 wt%, respectively, on the basis of 100 wt% of the positive electrode active material layer.

The substrate may be aluminum (Al) but is not limited thereto.

The negative electrode active material may include a material capable of reversibly intercalating/deintercalating lithium ions, lithium metal, an alloy of lithium metal, a material capable of being doped and undoped with lithium, or a transition metal oxide.

The material capable of reversibly intercalating/deintercalating lithium ions may be a carbon-based negative electrode active material, which may include, for example, crystalline carbon, amorphous carbon, or a combination thereof. Examples of the crystalline carbon may include graphite, such as natural graphite or artificial graphite, and examples of the amorphous carbon may include soft carbon, hard carbon, a pitch carbide, a meso-phase pitch carbide, sintered coke, and the like.

A Si-based negative electrode active material or a Sn-based negative electrode active material may be used as the material capable of being doped and undoped with lithium. The Si-based negative electrode active material may be silicon, a silicon-carbon composite, SiOₓ (0 < x ≤ 2), a Si-based alloy, or a combination thereof.

The silicon-carbon composite may be a composite of silicon and amorphous carbon. According to one embodiment, the silicon-carbon composite may be in the form of a silicon particle and amorphous carbon coated on the surface of the silicon particle.

The silicon-carbon composite may further include crystalline carbon. For example, the silicon-carbon composite may include a core including crystalline carbon and silicon particles and an amorphous carbon coating layer on the surface of the core.

A negative electrode for a lithium secondary battery may include a substrate and a negative electrode active material layer disposed on the substrate. The negative electrode active material layer may include a negative electrode active material and may further include a binder and/or a conductive material.

For example, the negative electrode active material layer may include about 90 wt % to about 99.5 wt % of a negative electrode active material, about 0.5 wt % to about 5 wt % of a binder, and about 0 wt % to about 5 wt % of a conductive material.

A non-aqueous binder, an aqueous binder, a dry binder, or a combination thereof may be used as the binder. When an aqueous binder is used as the negative electrode binder, a cellulose-based compound capable of imparting viscosity may be further included.

As the negative electrode substrate, one selected from copper foil, nickel foil, stainless steel foil, titanium foil, nickel foam, copper foam, conductive metal-coated polymer substrate, and combinations thereof may be used.

An electrolyte for a lithium secondary battery may include a non-aqueous organic solvent and a lithium salt.

The non-aqueous organic solvent acts as a medium through which ions involved in the electrochemical reaction of the battery can move.

The non-aqueous organic solvent may be a carbonate-based, an ester-based, an ether-based, a ketone-based, an alcohol-based solvent, an aprotic solvent, and may be used alone or in combination of two or more.

In addition, when a carbonate-based solvent is used, a mixture of cyclic carbonate and chain carbonate may be used.

Depending on the type of lithium secondary battery, a separator may be present between the first electrode plate (e.g., the negative electrode) and the second electrode plate (e.g., the positive electrode). As the separator, polyethylene, polypropylene, polyvinylidene fluoride, or a multilayer film including two or more layers thereof may be used.

The separator may include a porous substrate and a coating layer including an organic material, an inorganic material, or a combination thereof on one or both surfaces of the porous substrate.

The organic material may include a polyvinylidene fluoride-based polymer or a (meth)acrylic polymer.

The inorganic material may include inorganic particles selected from Al₂O₃, SiO₂, TiO₂, SnO₂, CeO₂, MgO, NiO, CaO, GaO, ZnO, ZrO₂, Y₂O₃, SrTiO₃, BaTiO₃, Mg(OH)₂, boehmite, and combinations thereof but is not limited thereto.

The organic material and the inorganic material may be mixed in one coating layer or may be in the form of a coating layer including (or containing) an organic material and a coating layer including (or containing) an inorganic material that are stacked on each other.

FIG. 2 is a view illustrating an interior of a pouch-type battery to which the electrode assembly of FIG. 1 is applied.

The pouch-type secondary battery includes an electrode assembly 10 and a pouch 11a that accommodates the electrode assembly 10.

The electrode assembly 10 is the same as that illustrated in FIG. 1. The first electrode tab 10g and the second electrode tab 10h of the electrode assembly 10 may be electrically connected to respective external first and second terminal leads 11b and 11c by welding. Each of the first terminal lead 11b and the second terminal lead 11c may be attached with a tab film 11d for insulation from the pouch 11a.

The pouch 11a may be sealed by having sealing parts 11e at the edges thereof come into contact with each other with accommodating the electrode assembly 10 therein, in which case the sealing may be achieved with the tab film 11d interposed between the sealing parts 11e. The sealing parts 11e of the pouch 11a may each be made of a thermal fusion material that generally has weak adhesion to metal. Thus, it may be fused to the pouch 11a by interposing the thin tab film 11d between the sealing parts 11e.

FIG. 3 is a cross-sectional view illustrating a cylindrical battery manufactured through the apparatus for manufacturing a secondary battery according to embodiments of the present disclosure.

The cylindrical battery 13 includes an electrode assembly 13a, a case 13p accommodating the electrode assembly 13a and an electrolyte therein, a cap assembly 13v coupled to an opening of the case 13p to seal the case 13p, and an insulating plate 13n positioned between the electrode assembly 13a and the cap assembly 13v inside the case.

The electrode assembly 13a may include a separator 13d and a first electrode 13c and a second electrode 13e positioned with the separator interposed therebetween and may be wound in a jelly-roll shape.

The first electrode 13c includes a first substrate and a first active material layer on the first substrate. A first lead tab 13j may extend outwardly from a first uncoated portion of the first substrate at where the first active material layer is not located, and the first lead tab 13j may be electrically connected to the cap assembly 13v.

The second electrode 13e includes a second substrate and a second active material layer on the second substrate. A second lead tab 13k may extend outwardly from a second uncoated portion of the second substrate at where the second active material layer is not located, and the second lead tab 13k may be electrically connected to the case 13p. The first lead tab 13j and the second lead tab 13k may extend in opposite directions.

The first electrode 13c may act as a positive electrode. In such an embodiment, the first substrate may be made of, for example, an aluminum foil, and the first active material layer may include, for example, a transition metal oxide. The second electrode 13e may act as a negative electrode. In such an embodiment, the second substrate may be made of, for example, a copper foil or a nickel foil, and the second active material layer may include graphite, for example.

The separator 13d prevents a short circuit between the first electrode 13c and the second electrode 13e while allowing movement of lithium ions therebetween. The separator 13d may be made of, for example, a polyethylene film, a polypropylene film, a polyethylene-polypropylene film, or the like.

The case 13p accommodates the electrode assembly 13a and, together with the cap assembly 13v, forms the external appearance of the secondary battery. The case 13p may have a substantially cylindrical body portion 13r and a bottom portion 13q connected to one side (e.g., to one end) of the body portion 13r. A beading part 13f (e.g., a bead) deformed inwardly may be formed in the body portion 13r, and a crimping part 13g (e.g., a crimp) bent inwardly may be formed at an open end of the body portion 13r.

The beading part 13f can reduce or prevent movement of the electrode assembly 13a inside the case 13p and can facilitate seating of the gasket 13h and the cap assembly 13v. The crimping part 13g may firmly fix the cap assembly 13v by pressing the edge of the cap assembly 13v against the gasket 13h. The case 13p may be formed of steel plated with nickel, for example.

The cap assembly 13v may be fixed to the inside of the crimping part 13g by the gasket 13h to seal the case 13p. The cap assembly 13v may include a cap up 13w, a safety vent 13s, a cap down 13t, an insulating member, and a subplate 13u, but is not limited to these examples and may be modified in various ways.

The cap up 13w may be positioned at the uppermost part of the cap assembly 13v. The cap up 13w may include a terminal part that protrudes upwardly and is connected to an external circuit, and an outlet for discharging gas may be arranged around the terminal part.

The safety vent 13s may be located under the cap up 13w. The safety vent 13s may include a protrusion part that protrudes convexly downwardly and is connected to the sub plate 13u, and at least one notch may be formed in the safety vent 13s around the protrusion part.

When gas is generated due to overcharging or abnormal operation of the secondary battery, the protrusion part is deformed upwardly by the pressure and separates from the sub plate 13u while the safety vent 13s is cut (e.g., bursts or tears) along the notch. The cut safety vent 13s may prevent the secondary battery from exploding by allowing for the gas to be discharged to the outside.

The cap down 13t may be below the safety vent 13s. The cap down 13t may have a first opening for exposing the protrusion part of the safety vent 13s and a second opening for gas discharge. The insulating member may be positioned between the safety vent 13s and the cap down 13t to insulate the safety vent 13s and the cap down 13t.

The sub plate 13u may be under the cap down 13t. The sub plate 13u may be fixed to a lower surface of the cap down 13t to block the first opening of the cap down 13t, and the protrusion part of the safety vent 13s may be fixed to the sub plate 13u. The first lead tab 13j, which is drawn out from the electrode assembly 13a, may be fixed to the sub plate 13u. Accordingly, the cap up 13w, the safety vent 13s, the cap down 13t, and the sub plate 13u may be electrically connected to the first electrode 13c of the electrode assembly 13a.

The insulating plate 13n may be positioned to be in contact with the electrode assembly 13a below the beading part 13. The insulating plate 13n may have a tab opening through which the first lead tab 13j is drawn out. The cap assembly 13v, which is electrically connected to the first electrode 13c by the first lead tab 13j, may face the electrode assembly 13a with the insulating plate 13n interposed therebetween and may maintain a state of being insulated (e.g., electrically insulated) from the electrode assembly 13a by the insulating plate. Meanwhile, another insulating plate 13m may be included for insulation between the electrode assembly 13a and the bottom portion 13q of the case 13p.

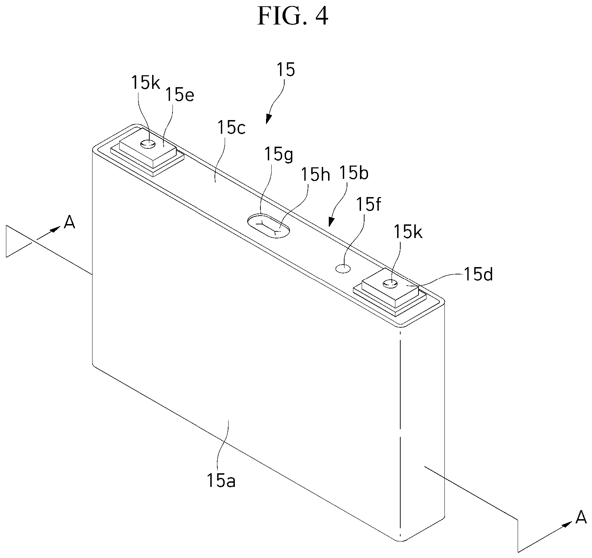

FIG. 4 is a perspective view illustrating an exterior of a prismatic battery which may be manufactured through the apparatus for manufacturing a secondary battery according to embodiments of the present disclosure.

A case 15a forms the overall appearance of a prismatic battery and may be formed of a conductive metal such as aluminum, aluminum alloy, or nickel-plated steel. In addition, the case 15a may provide a space for accommodating an electrode assembly therein.

A cap assembly 15b may include a cap plate 15c that covers the opening of the case 15a. In some examples, the case 15a and the cap plate 15c may be made of a conductive material. Here, a first terminal 15d and a second terminal 15e may be electrically connected to respective positive and negative (or negative and positive) electrodes inside the case 15a, and may be installed to protrude outward through the cap plate 15c.

An electrolyte inlet 15f may be formed in the cap plate 15c, a gas discharge hole 15g may be opened, and a vent, i.e., a gas discharge device 15h may be connected to the gas discharge hole 15g. The gas discharge device 15h is opened by gas generated inside the battery and performs a degassing function.

FIG. 5 is a cross-sectional view along line A-A in FIG. 4.

An electrode assembly 15r may be formed by winding or stacking a first electrode plate, a separator, and a second electrode plate. When the electrode assembly 15r is a wound type, a winding axis may be parallel to the longitudinal direction of the case 15a. In some other embodiments, the electrode assembly 15r is a stack type rather than a winding type. The shape of the electrode assembly 15r is not limited in the present disclosure.

In addition, the electrode assembly 15r may be a Z-stack electrode assembly in which a positive electrode plate and a negative electrode plate are inserted into both sides of a separator, which is then bent into a Z-stack. In addition, one or more electrode assemblies 15r may be stacked such that long sides of the electrode assemblies are adjacent to each other and accommodated in the case, and the number of electrode assemblies in the case is not limited in the present disclosure. The first electrode plate of the electrode assembly 15r may act as a negative electrode, and the second electrode plate may act as a positive electrode. Of course, the reverse is also possible.

The first electrode plate may be formed by applying a first electrode active material, such as graphite, carbon, or the like, to a first electrode current collector formed of a metal foil, such as copper, a copper alloy, nickel, a nickel alloy, or the like. The first electrode plate may include a first electrode tab 15p (e.g., a first uncoated portion) that is a region to which the first electrode active material is not applied. The first electrode tab 15p may act as a current flow path between the first electrode plate and the first current collector 15m. In some embodiments, when the first electrode plate is manufactured, the first electrode tab 15p is formed by being cut in advance to protrude to one side of the electrode assembly, or the first electrode tab protrudes to one side of the electrode assembly more than (e.g., farther than or beyond) the separator without being separately cut.

The second electrode plate may be formed by applying a second electrode active material, such as a transition metal oxide, on a second electrode current collector formed of a metal foil, such as aluminum or an aluminum alloy. The second electrode plate may include a second electrode tab 15q (e.g., a second uncoated portion) that is a region to which the second electrode active material is not applied. The second electrode tab 15q may act as a current flow path between the second electrode plate and the second current collector 15n. In some embodiments, the second electrode tab 15q may be formed by being cut in advance to protrude to the other side (e.g., the opposite side) of the electrode assembly when the second electrode plate is manufactured, or the second electrode plate may protrude to the other side of the electrode assembly more than (e.g., farther than or beyond) the separator without being separately cut.

In FIG. 5, the first electrode tab 15p and the second electrode tab 15q are illustrated as being positioned on the right side and the left side of the electrode assembly 15r, respectively. However, in some other embodiments, both the first electrode tab 15p and the second electrode tab 15q may be positioned together on the right side or the left side of the electrode assembly 15r.

Here, the left side and the right side of the electrode assembly 15r are based on the battery illustrated in FIG. 5 for convenience of explanation. The left side refers to the side of the vertical surface of the electrode assembly 15r to which the second current collector 15n is joined, and the right side refers to the opposite side to which the first current collector 15m is joined. Therefore, the terms "left side" and "right side" of the electrode assembly 15r used herein may vary when the battery rotates left and right or up and down.

The separator prevents or substantially reduces instances of a short circuit between the first electrode and the second electrode while allowing movement of lithium ions therebetween. The separator may be made of, for example, a polyethylene film, a polypropylene film, a polyethylene-polypropylene film, or the like.

In some embodiments, an electrode assembly 15r is accommodated in the case 15a along with an electrolyte.

In the electrode assembly 15r, the first current collector 15m and the second current collector 15n may be welded and connected to the first electrode tab 15p extending from the first electrode plate and the second electrode tab 15q extending from the second electrode plate, respectively.

As illustrated in FIG. 5, the first current collector 15m and the second current collector 15n are connected to the first terminal 15d and the second terminal 15e through connection members 15k, respectively. In some embodiments, the connection members 15k may each have an outer peripheral surface that is threaded, and may be fastened to the first terminal 15d and the second terminal 15e by screwing. However, the present disclosure is not limited thereto. For example, the connection members 15k may also be coupled to the first terminal 15d and the second terminal 15e by riveting or welding.

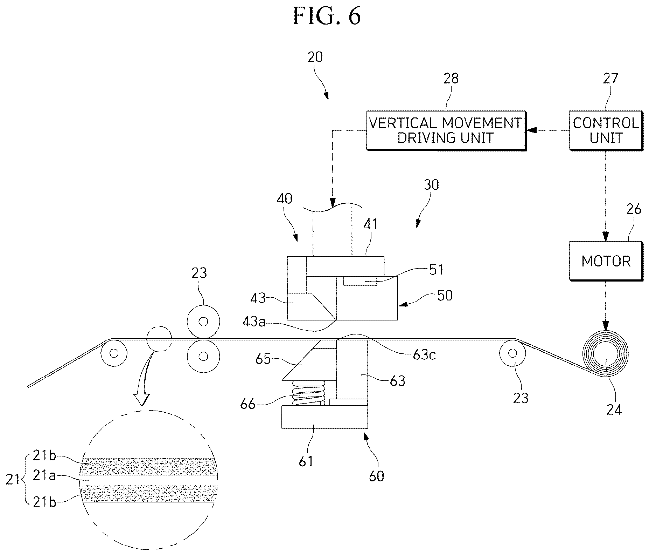

FIG. 6 is a view for describing a configuration and operation method of the secondary battery manufacturing apparatus 20 according to some embodiments of the present disclosure.

The secondary battery manufacturing apparatus 20 of the present embodiment may cut an electrode plate 21 moving along a predetermined transport path and prevent deintercalation of an active material from a substrate by suppressing movement of the electrode plate 21 when cutting. The movement of the electrode plate may occur due to pressures of upper and lower cutters which are applied to the electrode plate at the moment of cutting the electrode plate. At the moment of cutting, in the case that the electrode plate 21 moves, a cut surface may be damaged, thereby greatly degrading cutting quality. However, when the electrode plate is fixed to not move, the cut surface is not damaged.

The secondary battery manufacturing apparatus 20 according to the present embodiment has a configuration that prevents movement of the electrode plate by fixing the electrode plate at the moment of cutting the electrode plate 21. In particular, since a tilting stripper installed on an upper cutter presses the electrode plate 21 with a uniform pressure, the movement of the electrode plate can hardly occur.

As illustrated, the secondary battery manufacturing apparatus 20 according to the present embodiment may include an electrode plate transport unit, a winding unit, a cutting unit (or an electrode plate cutting unit) 30, and a vertical movement driving unit.

The electrode plate transport unit may transport the electrode plate 21, which is a processing target, along a predetermined transport path and include a plurality of transport rollers 23. Some transport rollers are rollers having a driving force, and the remaining rollers do not have a driving force and may serve to only support the electrode plate 21 transported by the transport rollers 23 tightly.

The electrode plate 21 is a stack formed of a substrate 21a and a mixture 21b. The mixture 21b is an active material stacked on one surface or both surfaces of the substrate 21a.

The winding unit may wind the electrode plate 21 transported by the electrode plate transport unit. The winding unit may include a winding roll 24 and a motor 26. The winding roll 24 may be rotated by a rotational force received from the motor 26 and may wind the electrode plate 21 that has passed the transport roller 23. The winding roll 24 may be rotated by receiving a rotational force from the motor 26. The electrode plate 21 wound around the winding roll 24 may be taken out from the winding roll 24 by an operator and moved to a subsequent process.

In addition, the motor 26 may be operated by a control signal of the control unit 27 to rotate or not rotate the winding roll 24. The control unit 27 may control the on/off and rotational speed of the motor 26.

Meanwhile, the cutting unit 30 may cut the electrode plate 21 transported along the transport path by the transport roller 23. The winding roll 24 is rotated and not rotated repeatedly so that the cutting unit 30 cuts the electrode plate 21.

The cutting unit 30 may include an upper cutting unit 40 and a lower cutting unit 60. The upper cutting unit 40 and the lower cutting unit 60 may be disposed at opposite sides with the electrode plate 21 interposed therebetween. That is, the upper cutting unit 40 may be positioned above the electrode plate 21, and the lower cutting unit 60 may be positioned below the electrode plate 21.

The lower cutting unit 60 is installed below the transport path of the electrode plate 21 and includes a base 61, a lower cutter 63, a spring 66, and a support stripper 65.

The base 61 is a structure fixed under the transport path and may support the lower cutter 63 and the spring 66. In another embodiment, the base 61 may also be formed to move upwardly and downwardly.

The lower cutter 63 may be fixed on the base 61 and cut the electrode plate 21 through cross motion with the upper cutter 43 to be described herein. A virtual straight line connecting a blade 43a of the upper cutter 43 to a blade 63c of the lower cutter 63 may be orthogonal to the electrode plate 21. "Cross motion" is movement in which the blades of the upper cutter 43 and lower cutter 63 cross such as two blades of scissors crossing each other. The upper cutter 43 may serve as one blade of the scissors, and the lower cutter 63 may serve as the other blade.

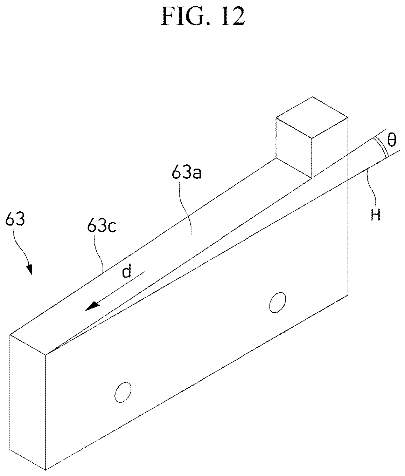

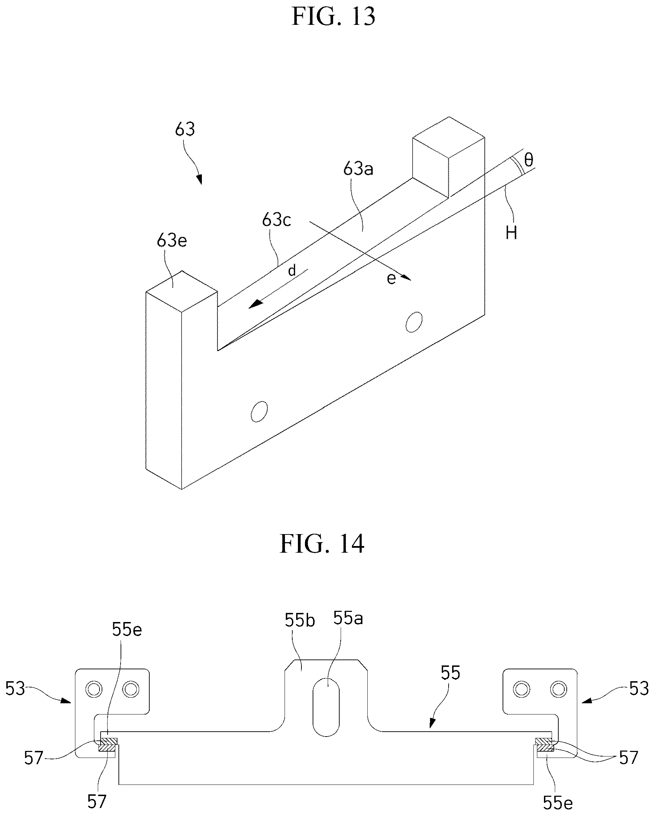

The lower cutter 63 in the present embodiment, for example, may be a type illustrated in FIG. 12 or a type illustrated in FIG. 13. The lower cutter 63 will be described with reference to FIGS. 12 and 13.

As illustrated in FIG. 12, the lower cutter 63 may have the form of a vertical plate having a predetermined thickness and have an inclined surface 63a on an upper surface thereof. The inclined surface 63a has a flat shape and is inclined downwardly in a width direction of the electrode plate, that is, a direction of arrow d. The inclined surface 63a may be in surface contact with a lower surface of the electrode plate 21 to provide support strength when the electrode plate is cut.

An inclination angle θ of the inclined surface 63a may be 0.5 degrees or less with respect to a virtual plane including the electrode plate. That is, an angle between a plane including the inclined surface 63a and a plane including the electrode plate may be 0.5 degrees or less.

When the electrode plate 21 is being transported along a horizontal path and the lower cutter 63 is positioned below the electrode plate 21, the inclined surface 63a is inclined at an angle of 0.5 degrees or less with respect to a horizontal line H.

In addition, the blade 63c may be formed at one corner of the inclined surface 63a, and the blade 63c may be inclined. The blade 63c may cut the electrode plate 21 through cross motion with the blade 43a of the upper cutter 43.

As illustrated in FIG. 13, a transport guide 63e may be installed at one side of an upper surface of the lower cutter 63. The transport guide 63e is a protrusion formed integrally with a lower portion of the inclined surface 63a in the inclined direction and may prevent the electrode plate 21 from obliquely moving. For example, the transport guide 63e may serve to prevent the electrode plate 21 moving in a direction of arrow e from obliquely moving or being detached obliquely in a direction of arrow d..

Referring back to FIG. 6, the spring 66 may be fixed to an upper portion of the base 61 to elastically support the support stripper 65. When cutting the electrode plate 21, the support stripper 65 may be in close contact with the lower surface of the electrode plate 21 by the spring 66 to prevent the electrode plate 21 from slipping. That is, the support stripper 65 is positioned at a side portion of the lower cutter 63 to support the electrode plate 21 upwardly, and the support stripper 65 prevents the electrode plate 21 from being moved by cutting pressures of the upper and lower cutters. When cutting the electrode plate, the support stripper 65 may be pressed by the upper cutter 43 to move vertically.

Meanwhile, the upper cutting unit 40 may be installed to move upwardly and downwardly above the transport path of the electrode plate 21. The upper cutting unit 40 may include a vertical movement structure 41, the upper cutter 43, and a stripper module 50.

The vertical movement structure 41 may be connected to the vertical movement driving unit 28 and moved upwardly and downwardly by the vertical movement driving unit 28. The vertical movement driving unit 28 may be operated by a control signal of the control unit 27 to move the upper cutting unit 40 upwardly and downwardly.

The upper cutter 43 may be configured to move upwardly and downwardly above the transport path of the electrode plate 21. The upper cutter 43 may cut the electrode plate 21 through cross motion with the lower cutter 63 when the upper cutting unit 40 moves downwardly. The upper cutter 43 is a blade installed above the transport path of the electrode plate 21 and may have the blade 43a on an end portion thereof. The blade 43a is a sharp blade formed to cut the electrode plate 21. The upper cutter 43 may be mounted on a lower portion of the vertical movement structure 41. In another embodiment, the upper cutter 43 may be detachably coupled to the vertical movement structure 41.

The stripper module 50 may be installed at a side portion of the upper cutter 43 to support the electrode plate 21 toward the lower cutter 63. That is, when the upper cutting unit 40 moves downwardly, the electrode plate 21 may be pressed downwardly to prevent movement of the electrode plate when cutting. In particular, the stripper module 50 includes a tilting stripper 55.

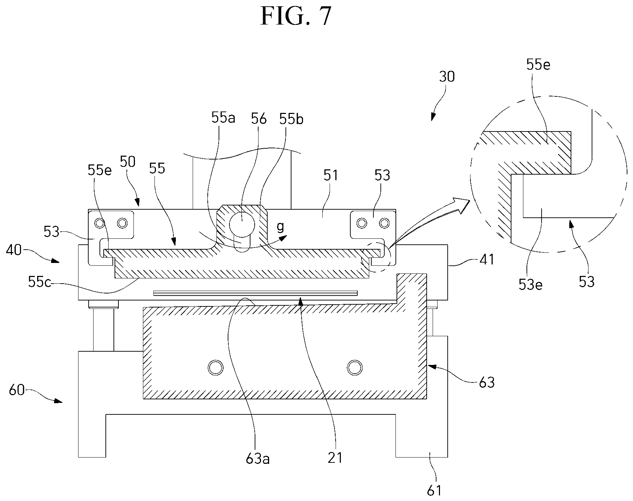

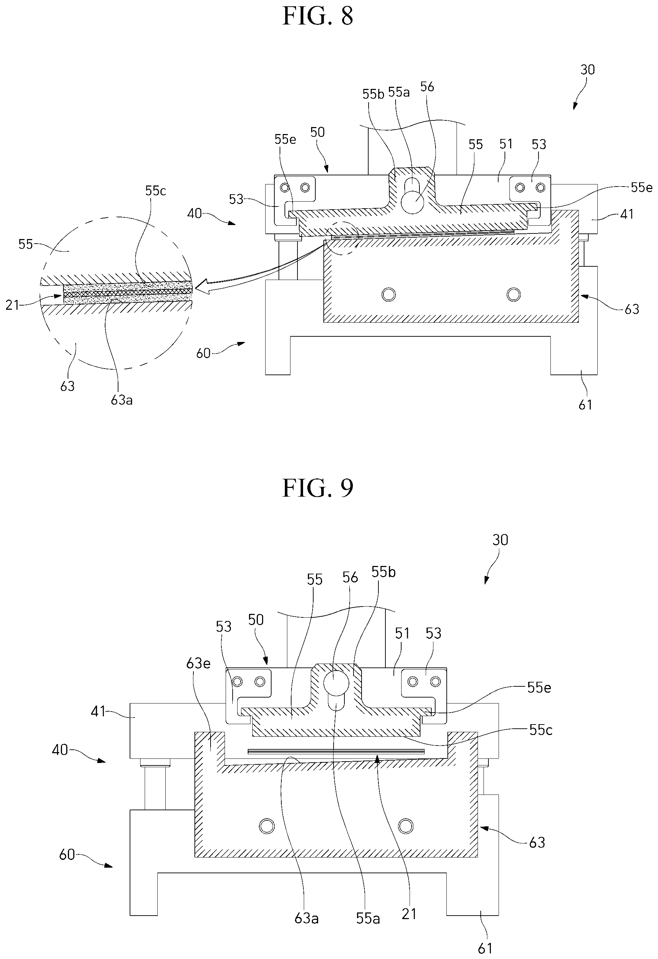

FIGS. 7 and 8 are views for describing a configuration and operation of the electrode plate cutting unit 30 according to some embodiments of the present disclosure.

As illustrated, the upper cutting unit 40 may be installed above the electrode plate 21, and the lower cutting unit 60 may be installed below the electrode plate 21.

The stripper module 50 of the upper cutting unit 40 may include a support body 51, the tilting stripper 55, a pair of support brackets 53, and a stripper supporter.

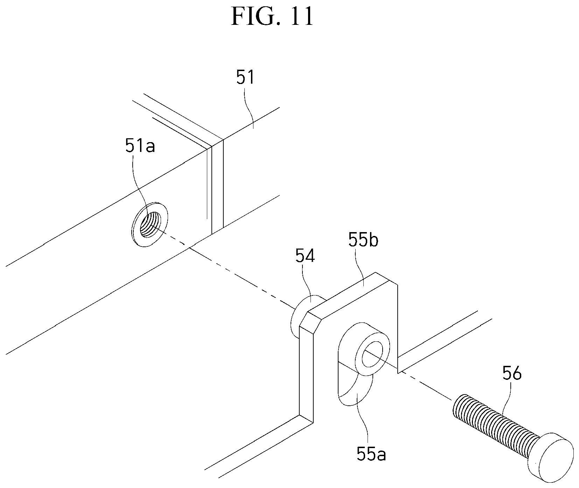

The support body 51 may be a block-shaped member fixed to one side of the vertical movement structure 41. As illustrated in FIG. 11, a screw hole 51a may be formed in a side portion of the support body 51. The screw hole 51a is a hole in which a screw 56, which is a stripper supporter, is screw-coupled and description thereof will be given herein.

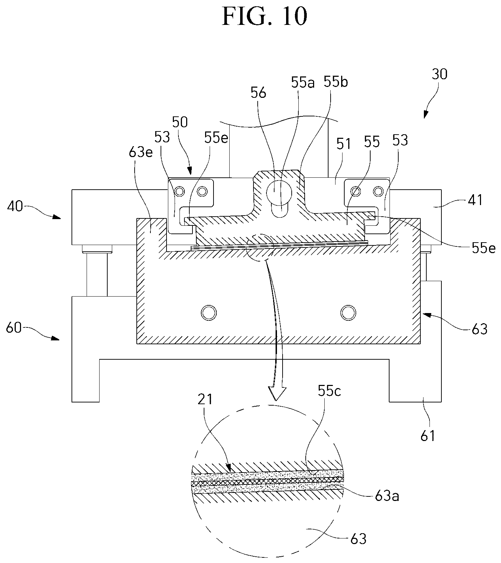

The tilting stripper 55 is a tiltable member that is installed at a side portion of the upper cutter 43 to support the electrode plate 21 toward the lower cutter 63, and the tilting stripper 55 may be tilted while supporting the electrode plate 21 toward the lower cutter 63. A close-contact surface 55c may be provided on a lower surface of the tilting stripper 55. The close-contact surface 55c is a flat surface in close contact with the electrode plate 21. As illustrated in FIGS. 8 and 10, the close-contact surface 55c may be parallel to the inclined surface 63a of the lower cutter 63 in a state in which the tilting stripper 55 is tilted.

In addition, a balancing head 55b may be provided on an upper central portion of the tilting stripper 55. The "upper central portion" may be a portion positioned to correspond to the center of gravity of the tilting stripper 55, but is not limited thereto. The balancing head 55b is a portion that extends upwardly from a central portion of the tilting stripper 55 and may include a vertical long hole 55a. The vertical long hole 55a is a through hole that extends vertically and is a hole through which the screw 56 may pass.

In addition, catch portions 55e may be formed at both end portions of the tilting stripper 55 in a width direction. Here, the width direction is the same direction as a transverse direction (TD) of the electrode plate 21. The catch portions 55e may be portions that protrudes from both end portions of the tilting stripper 55 and may be portions caught on supports 53e of the support brackets 53.

The support bracket 53 is a level maintenance portion that maintains the tilting stripper 55 horizontally in a state in which the support body 51 moves upwardly. The support bracket 53 may be maintained horizontally by the level maintenance portion while being caught on the support body 51. For reference, the close-contact surface 55c of the tilting stripper 55 may be positioned at a lower level than the support bracket 53. Even when the close-contact surface 55c of the tilting stripper 55 is in contact with the electrode plate 21, the support bracket 53 does not hit the lower cutter 63.

The support bracket 53 may be fixed to the support body 51 and positioned at an opposite side of the tilting stripper 55 interposed therebetween. The support bracket 53 may be symmetrical centered on the balancing head 55b. In addition, the support 53e may be formed on a lower end portion of the support bracket 53. The support 53e is a protrusion positioned at a lower portion of the catch portion 55e of the tilting stripper 55 to support the catch portion 55e. Since the catch portions 55e positioned at both sides are simultaneously supported by the supports 53e, the tilting stripper 55 may be maintained horizontally on the electrode plate 21.

In addition, the stripper supporter may be formed so that the tilting stripper 55 is supported by the support body 51 and may maintain the tilting stripper55 in a horizontal state in a state in which the support body 51 moves upwardly. In addition, when the support body 51 moves downwardly, the tilting stripper 55 may receive a reaction force from the lower cutter 63 to tilt in a direction of arrow g at the same angle as the inclination angle of the lower cutter 63. When there is no support bracket 53, the tilting stripper 55 may rotate in the direction of arrow g or a direction opposite thereto.

The stripper supporter may be a rotary shaft member coupled to the support body 51 after passing through the vertical long hole 55a of the balancing head 55b. In addition, the rotary shaft member in the present embodiment may be a screw 56. As illustrated in FIG. 11, the screw 56 may be screw-coupled to the screw hole 51a of the support body after passing through the vertical long hole 55a. The screw 56 may serve as a rotary shaft of the tilting stripper 55. The reference numeral 54 of FIG. 11 may be a bushing through which the screw 56 passes.

When the upper cutting unit 40 having the herein configuration moves downwardly, the close-contact surface 55c of the tilting stripper 55 is in contact with the electrode plate 21 and starts to tilt, and eventually, as illustrated in FIG. 8, the close-contact surface 55c may press the electrode plate 21 downwardly while being in surface contact with the electrode plate 21. In this state, when the upper cutting unit 40 further moves downwardly, the upper cutter 43 may move downwardly and the electrode plate 21 may be cut through the cross motion with the lower cutter 63.

FIGS. 9 and 10 are views illustrating an electrode plate cutting unit according to some other embodiments of the present disclosure.

As illustrated, the transport guide 63e may be formed on the upper surface of the lower cutter 63. The transport guide 63e may prevent the electrode plate 21 from obliquely moving along the transport path. Other components other than the transport guide 63e are the same as those illustrated in FIGS. 7 and 8.

FIG. 14 is a view for describing the tilting stripper 55 and the support bracket 53 applicable to the cutting unit according to some other embodiments of the present disclosure.

As illustrated, a contact tip 57 may be provided on a lower surface of the catch portion 55e and an upper surface of the support 53e. The contact tip 57 is a wear-resistant member positioned at a friction portion of the tilting stripper 55 and the support bracket 53. The contact tip 57 may be formed of an engineering plastic.

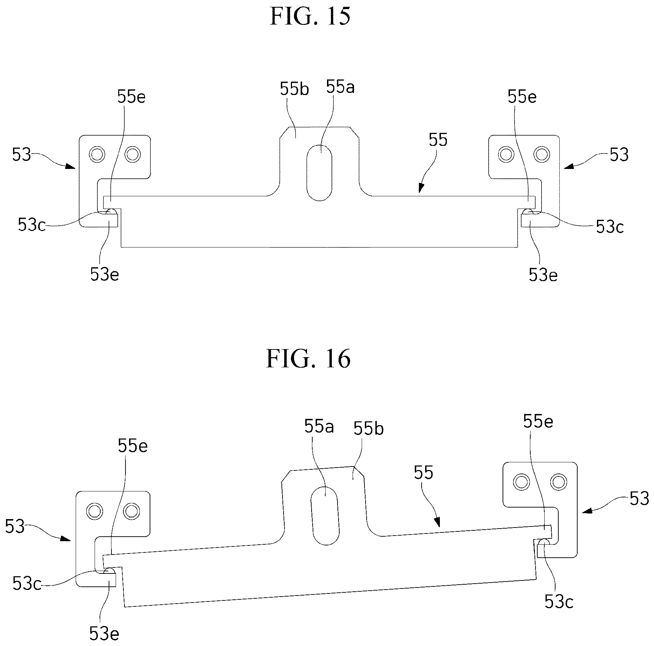

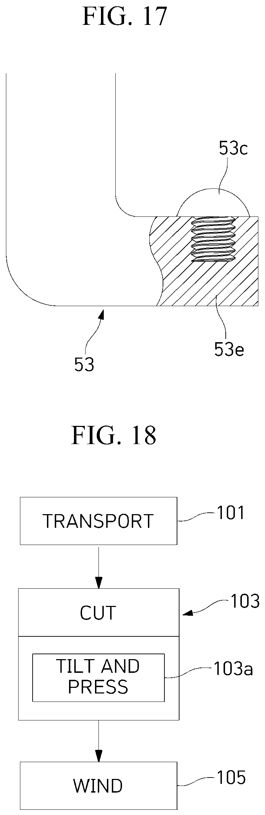

FIGS. 15 and 16 are views illustrating the support screws 53c applied to the supports 53e, and FIG. 17 is a partially cut view illustrating an end portion of the support bracket of FIG. 16.

Referring to the drawings, it can be seen that the support screws 53c are mounted on the supports 53e at lower ends of the support brackets 53 positioned at both sides. The support screw 53c may be a round-head screw that is screw-coupled on the support 53e. The support screw 53c may prevent direct friction between the support 53e and the catch portion 55e. The support screw 53c may be formed of Teflon or acetal.

FIG. 18 is a flowchart illustrating a method of manufacturing a secondary battery according to some embodiments of the present disclosure.

The secondary battery manufacturing method according to the present embodiment may be a method of manufacturing a secondary battery using the secondary battery manufacturing apparatus 20. As illustrated, the method of manufacturing a secondary battery may include a transporting operation 101, a cutting operation 103, and a winding operation 105.

The transporting operation 101 is a process of transporting the electrode plate 21, which will be cut, along the predetermined transport path through the electrode plate transport unit.

In addition, the cutting operation 103 is a process of cutting the electrode plate 21 using the cutting unit 30. The cutting operation 103 includes a tilting pressing process 103a of tilting the tilting stripper to bring the tilting stripper into close contact with the electrode plate. Through the tilting pressing process 103a, the electrode plate 21 may be cut while being in close contact with the inclined surface 63a of the lower cutter 63. The subsequent winding operation 105 is a process of winding the electrode plate 21 cut through the cutting operation 103.

According to an electrode plate cutting unit for a secondary battery of the present disclosure formed as described herein, by suppressing movement of an electrode plate when cutting the electrode plate, it is possible to prevent deintercalation of an active material from a substrate when cutting and omit a post-processing process for collecting foreign substances after cutting.

In addition, since a tilting stripper supporting the electrode plate can tilt, damage or deformation of a front end surface is not caused through uniform surface contact between a cutter and the tilting stripper.

Although the present disclosure has been described herein with respect to embodiments thereof, the present disclosure is not limited thereto. Various modifications and variations can be made thereto by those skilled in the art within the scope of the present disclosure as defined by the appended claims and their equivalents.

## Claims

1. An electrode plate cutting unit for a secondary battery, comprising:
a lower cutting unit, having:
a lower cutter installed below a transport path of an electrode plate moving along the transport path, the lower cutter having an inclined blade (63c), and
a support stripper (65) positioned at a side portion of the lower cutter to support the electrode plate upwardly; and
an upper cutting unit, having:
an upper cutter configured to move upwardly and downwardly above the transport path to cut the electrode plate through cross motion with the lower cutter when moving downwardly, and
a tilting stripper installed at a side portion of the upper cutter and configured to tilt while supporting the electrode plate toward the lower cutter.

2. The electrode plate cutting unit as claimed in claim 1, wherein the an upper surface of the lower cutter includes an inclined surface inclined downwardly in a width direction of the electrode plate and having the blade at one corner thereof.

3. The electrode plate cutting unit as claimed in claim 1 or 2, wherein the upper cutting unit comprises:
a vertical movement structure that receives external power and is configured to move upwardly and downwardly;
a support body fixed to the vertical movement structure; and
a stripper supporter that supports the tilting stripper on the support body, and is configured to maintain the tilting stripper in a horizontal state in which the support body moves upwardly, and to tilt the tilting stripper at a same angle as an inclination angle of the lower cutter by receiving a reaction force from the lower cutter when the support body moves downwardly.

4. The electrode plate cutting unit as claimed in claim 3, wherein a balancing head extending upwardly from the tilting stripper and having a vertical long hole is provided on the tilting stripper, and
the stripper supporter has a rotary shaft member coupled to the support body after passing through the vertical long hole of the balancing head.

5. The electrode plate cutting unit as claimed in claim 4, wherein the rotary shaft member comprises a screw that is screw-coupled to the support body after passing through the vertical long hole.

6. The electrode plate cutting unit as claimed in claim 4 or 5, wherein the support body further comprises a level maintenance portion for maintaining the tilting stripper in a horizontal state while the support body moves upwardly.

7. The electrode plate cutting unit as claimed in claim 6, wherein catch portions are formed on both end portions of the tilting stripper, and
the level maintenance portion has a support bracket fixed to the support body and positioned at an opposite side with the tilting stripper interposed therebetween to support the catch portion upwardly.

8. The electrode plate cutting unit as claimed in claim 7, wherein the support bracket has a support positioned at a lower portion of the catch portion of the tilting stripper to support the catch portion.

9. The electrode plate cutting unit as claimed in claim 2, or any one of claims 3 to 6 when dependent on at least claim 2, wherein an inclination angle of the inclined surface is 0.5 degrees or less with respect to a plane comprising the electrode plate.

10. The electrode plate cutting unit as claimed in any one of claims 1 to 7, wherein a transport guide for preventing the electrode plate from obliquely moving is formed on the lower cutter.

11. A secondary battery manufacturing apparatus comprising:
an electrode plate transport unit (23) configured to transport an electrode plate (21) along a transport path;
a winding unit (24, 26) configured to wind the electrode plate transported by the electrode plate transport unit;
a cutting unit (30) as claimed in any one of claims 1 to 10; and
a vertical movement driving unit (28) configured to move the upper cutting unit (40) upwardly and downwardly.

12. A method of manufacturing a secondary battery, comprising:
a transporting operation of transporting an electrode plate to be cut along a transport path;
a cutting operation of cutting the electrode plate using a cutting unit comprising a lower cutter installed below a transport path of an electrode plate moving along the transport path and having an inclined blade, a support stripper positioned at a side portion of the lower cutter to support the electrode plate upwardly, an upper cutter provided to move upwardly and downwardly above the transport path to cut the electrode plate through cross motion with the lower cutter when moving downwardly, and a tilting stripper installed at a side portion of the upper cutter and tilted while supporting the electrode plate toward the lower cutter, wherein the cutting of the electrode plate is performed while the tilting stripper is tilted to be in close contact with the electrode plate; and
a winding operation of winding the cut electrode plate.
